# EUROPÄISCHE PATENTSCHRIFT

(11) **EP 3 180 153 B1**
(45) Veröffentlichungstag und Bekanntmachung des Hinweises auf die Patenterteilung: **10.10.2018**
(21) Anmeldenummer: 15750698.1
(22) Anmeldetag: 11.08.2015
(51) Int. Cl.: B23K 26/04, G05B 19/19

(54) **VERFAHREN ZUM ERMITTELN VON ABSTANDSKORREKTURWERTEN BEIM LASERBEARBEITEN EINES WERKSTÜCKS UND ZUGEHÖRIGE LASERBEARBEITUNGSMASCHINE**
METHOD FOR DETERMINING DISTANCE CORRECTION VALUES DURING THE LASER MACHINING OF A WORKPIECE AND ASSOCIATED LASER MACHINE TOOL
PROCÉDÉ DE DÉTERMINATION DE VALEURS DE CORRECTION DE DISTANCE LORS DE L'USINAGE LASER D'UNE PIÈCE ET MACHINE D'USINAGE LASER ASSOCIÉE

(30) Priorität: 13.08.2014 DE 102014216084
(43) Veröffentlichungstag der Anmeldung: 21.06.2017
(73) Patentinhaber: TRUMPF Laser-und Systemtechnik GmbH, 71254 Ditzingen (DE)
(72) Erfinder: HAGENLOCHER, Tobias, 71254 Ditzingen (DE); KIEWELER, Thomas, 71299 Wimsheim (DE); REYER, Michael, 70825 Korntal-Münchingen (DE); WADEHN, Wolf, Dr., 06111 Newington (US)
(74) Vertreter: Kohler Schmid Möbus Patentanwälte
(86) Internationale Anmeldenummer: PCT/EP2015/068439
(87) Internationale Veröffentlichungsnummer: WO 2016/023893

(56) Entgegenhaltungen:
- DE-C1- 10 121 655
- US-A1- 2013 103 183

## Beschreibung

Die vorliegende Erfindung betrifft ein Verfahren zum Ermitteln von Abstandskorrekturwerten eines Sollabstandes zwischen einer an einem Laserbearbeitungskopf angeordneten Laserbearbeitungsdüse und einem Werkstück beim Laserbearbeiten des Werkstücks, wobei beim Laserbearbeiten der Abstand der entlang einer Soll-Bewegungsbahn bewegten Laserbearbeitungsdüse zum Werkstück kapazitiv gemessen und auf den korrigierten Sollabstand geregelt wird, sowie auch eine zum Durchführen dieses Verfahrens geeignete Laserbearbeitungsmaschine.

Ein derartiges Verfahren und eine derartige Laserbearbeitungsmaschine sind beispielsweise aus der DE 101 21 655 C1 bekannt geworden.

Beim Laserbearbeiten von Werkstücken steht die Fokuslage des Laserstrahls in direktem Zusammenhang mit dem Abstand zwischen einer Laserbearbeitungsdüse, aus der der Laserstrahl zusammen mit einem Prozessgas austritt, und dem Werkstück. Daher wird dieser Düsenabstand zum Werkstück kontinuierlich überwacht und auf einen fix vorgegebenen Sollabstand geregelt, indem der Laserbearbeitungskopf während der Laserbearbeitung auf das Werkstück zu- oder von diesem wegbewegt wird. Für ein optimales Schneidergebnis wird eine Abweichung des Düsenabstands von ±0,5 mm noch als akzeptabel toleriert.

Die Abstandsmessung zwischen Laserbearbeitungsdüse und Werkstück erfolgt häufig kapazitiv, indem die Kapazität zwischen der elektrisch leitenden Laserbearbeitungsdüse und dem elektrisch leitenden Werkstück gemessen und daraus anhand einer Kennlinie der Düsenabstand ermittelt wird. Diese Kennlinie, also der eindeutige Zusammenhang zwischen der gemessenen Kapazität und dem zugehörigen Düsenabstand, wird mittels eines ebenen Blechs aufgenommen. An 3-dimensionalen Werkstücken führen allerdings Innen- und Außenecken zu Abweichungen von der Kennlinie und damit zu einer fehlerhaften Messung des Düsenabstands, wodurch z.B. die Güte des Laserschnitts negativ beeinflusst wird. Dieses systematische Problem wird bisher mittels Korrekturwerten des Sollabstandes behoben, welche manuell mit hohem zeitlichem Aufwand empirisch ermittelt und an die entsprechenden Stellen des NC-Programms des Werkstücks eingetragen bzw. angepasst werden müssen.

Aus DE 101 21 655 C1 ist ein Verfahren zur Betriebssteuerung einer Laserbearbeitungsanlage mit einem Laserbearbeitungskopf zur Bearbeitung eines Werkstücks mittels eines Laserstrahls bekannt, wobei der Laserbearbeitungskopf eine elektrisch leitende Sensorelektrode zur kapazitiven Messung eines Abstands zwischen ihm und dem Werkstück trägt, mit folgenden Schritten:
- Anbringen der Sensorelektrode am Laserbearbeitungskopf;
- Positionieren des Laserbearbeitungskopfs relativ zum Werkstück in einem Abstand, welcher einer gewünschten minimalen Messkapazität entspricht;
- Messen dieser minimalen Kapazität und Speichern des Messwertes in einem elektronischen Speicher;
- Vergleichen einer bei einer Bearbeitung des Werkstücks gemessenen aktuellen Kapazität mit der gespeicherten minimalen Kapazität; und
- Erzeugen eines Befehlssignals, wenn die aktuelle Kapazität kleiner als die gespeicherte minimale Kapazität ist.

US 2013/103183 A1 offenbart einen Controller für die Laserstrahlbearbeitung, bei der ein Objekt durch das Einstrahlen eines Laserstrahls aus einem Bearbeitungskopf in einer Referenzspaltposition bearbeitet wird, die eine vorbestimmte Entfernung zum Objekt hat. Der Controller umfasst einen Spaltsensor, der die Größe des Spalts zwischen dem Bearbeitungskopf und dem Objekt erfasst, einen Spaltpositionsbefehlsberechnungsabschnitt, der zusammen mit dem Spaltsensor einen Spaltpositionsbefehl erzeugt, einen Servomechanismusabschnitt, der den Bearbeitungskopf gestützt auf den Spaltpositionsbefehl in die Referenzspaltposition bewegt, einen Servopositionsabweichungsleseabschnitt, der die Größe der Positionsabweichung des Servomechanismusabschnitts liest, einen Positionsverstärkungsberechnungsabschnitt, der eine korrigierte Positionsverstärkung des Servomechanismusabschnitts berechnet und zwar aus der Größe der Positionsabweichung des Servomechanismusabschnitts, und einen Positionsverstärkungsersetzungsabschnitt, der die Positionsverstärkung des Servomechanismusabschnitts durch die korrigierte Positionsverstärkung ersetzt, welche der Positionsverstärkungsberechnungsabschnitt berechnet.

Aus WO 2012/022718 A1 ist eine kapazitive Messung des Abstands einer Laserbearbeitungsdüse zum Werkstück bekannt. Um einen eindeutigen Zusammenhang zwischen der Kapazität und dem Düsenabstand herzustellen, wird eine Kennlinie an einem ebenen Werkstück aufgenommen. Ist die Geometrie des Werkstücks nicht entlang der gesamten Soll-Bewegungsbahn konstant, verändert sich das Abstandssignal auch mit der Werkstückgeometrie, was zu einer ungenauen Bestimmung des Düsenabstands führen kann. Es werden verschiedene Düsengeometrien beschrieben, welche eine geringe laterale Empfindlichkeit der Kapazitätsmessung aufweisen, um so den Einfluss der Werkstückgeometrie auf das Abstandssignal zu verringern.

Es ist demgegenüber die Aufgabe der Erfindung, ein Verfahren der eingangs genannten Art dahingehend weiterzubilden, dass die Abstandskorrekturwerte möglichst einfach und ohne großen Zeitaufwand ermittelt werden können, sowie eine zum Durchführen des Verfahrenes geeignete Laserbearbeitungsmaschine anzugeben.

Diese Aufgabe wird erfindungsgemäß dadurch gelöst, dass das Werkstück sowohl mit der Laserbearbeitungsdüse als auch mit einem anstelle der Laserbearbeitungsdüse an dem Laserbearbeitungskopf angeordneten Messkopf, welcher eine geringere laterale Empfindlichkeit der Kapazitätsmessung als die Laserbearbeitungsdüse aufweist, jeweils unter Vorgabe eines Sollabstands abgefahren und dabei die abgefahrene Bewegungsbahn der Laserbearbeitungsdüse bestimmt wird und dass aus den mit der Laserbearbeitungsdüse und mit dem Messkopf bestimmten Bewegungsbahnen die Abstandskorrekturwerte für den Sollabstand der Laserbearbeitungsdüse entlang der Soll-Bewegungsbahn beim Laserbearbeiten des Werkstücks ermittelt werden. Vorzugsweise fahren die Laserbearbeitungsdüse und der Messkopf das Werkstück mit dem gleichen Sollabstand ab.

Erfindungsgemäß wird durch Abfahren des Werkstücks sowohl mit dem Messkopf als auch mit der eigentlichen Laserbearbeitungsdüse, und zwar unter Vorgabe des nichtkorrigierten fix vorgegebenen Sollabstandes, jeweils die Werkstücktopographie anhand der abgefahrenen Bewegungsbahnen des Messkopfes und der Laserbearbeitungsdüse bestimmt. Da der Messkopf eine geringere laterale Empfindlichkeit der Kapazitätsmessung als die Laserbearbeitungsdüse aufweist, wird das Abstandssignal des Messkopfes - anders als das Abstandssignal der Laserbearbeitungsdüse - nicht von der Werkstückgeometrie beeinflusst. Der Abstand des Messkopfes entspricht daher entlang der gesamten abgefahrenen Bewegungsbahn stets dem vorgegebenen Sollabstand, wohingegen der Abstand der Laserbearbeitungsdüse bei Innen- und Außenecken deutlich größer als der vorgegebene Sollabstand ist. Der Messkopf ist somit zur präzisen geometrieunabhängigen Einhaltung des Abstands zwischen Laserbearbeitungsdüse und Werkstück besser eignet als die Laserbearbeitungsdüse.

Die Soll-Bewegungsbahn wird also einmal mit der höheren Abstandsmessgenauigkeit des Messkopfes und einmal mit der geringeren Abstandsmessgenauigkeit der Laserbearbeitungsdüse abgefahren, wobei aus der Differenz der abgefahrenen Bewegungsbahnen die zur Einhaltung des Sollabstands erforderlichen (lokalen) Abstandskorrekturwerte für die Bewegungsbahn der Laserbearbeitungsdüse errechnet werden. Bei der Bearbeitung identischer Bauteile einer Serie werden nun diese Abstandskorrekturwerte berücksichtigt und so der Sollabstand zwischen Werkstück und Laserbearbeitungsdüse in einem engeren Toleranzfenster als bisher konstant gehalten.

Mit der Erfindung lassen sich insbesondere folgende Vorteile erzielen:
- Zeitersparnis zum Einrichten eines Bauteils;
- geringere Prozesskenntnis des Bedieners erforderlich;
- Reduktion von Fehlerquellen durch Automatisierung;
- Kleinststückzahlen werden für die Laserbearbeitung interessant.

Vorzugsweise ist der Messkopf als Messspitze ausgebildet, deren Durchmesser an dem werkstückzugewandten Messende kleiner als der Düsendurchmesser an dem werkstückzugewandten Düsenende der Laserbearbeitungsdüse ist. Ein Schaft der Messspitze ist entweder aus elektrisch nichtleitendem Material oder mit einer geerdeten Abschirmung umgeben, um die laterale Empfindlichkeit der Kapazitätsmessung zu verringern.

Besonders bevorzugt werden für einen zu bearbeitenden Werkstücktyp die zugehörigen Abstandskorrekturwerte für den Sollabstand der Laserbearbeitungsdüse entlang der Soll-Bewegungsbahn als korrigierte Sollabstände in ein NC-Programm zum Laserbearbeiten des Werkstücks übernommen. Wird anhand der abgefahrenen Bewegungsbahnen festgestellt, dass ein im NC-Programm zum Laserbearbeiten eines Werkstücks eingestellter Soll-Düsenabstand von z.B. 1,0 mm in einer Innenecke des Werkstücks zu einem Ist-Düsenabstand von 1,25 mm führen würde, so wird im NC-Programm der Soll-Düsenabstand in dieser Innenecke auf 0,75 mm reduziert, was beim Laserbearbeiten des Werkstücks dann in der Innenecke zu dem gewünschten Ist-Düsenabstand von 1,0 mm führt.

Weiterhin bevorzugt erfolgt das Laserbearbeiten eines Werkstücks entlang der Soll-Bewegungsbahn mit den zuvor an diesem Werkstück oder an einem gleichen Werkstück ermittelten Abstandskorrekturwerten, wodurch auch bei 3-dimensionalen Werkstücken der Düsenabstand in einem engen Toleranzbereich konstant gehalten werden kann.

Die Erfindung betrifft in einem weiteren Aspekt auch eine Maschine zum Laserbearbeiten eines Werkstücks, insbesondere eine 3D-Lasermaschine oder Rohrbearbeitungsmaschine, mit einer an einem Laserbearbeitungskopf angeordneten Laserbearbeitungsdüse, mit einer Abstandsmesseinrichtung zur kapazitiven Messung des Abstands zwischen der Laserbearbeitungsdüse und dem Werkstück und mit einer Maschinensteuerung zum Bewegen der Laserbearbeitungsdüse entlang einer Soll-Bewegungsbahn unter Vorgabe eines Sollabstands der Laserbearbeitungsdüse zum Werkstück. Erfindungsgemäß weist die Laserbearbeitungsmaschine eine Einrichtung auf, die anhand von Bewegungsbahnen, welche entlang einer Soll-Bewegungsbahn sowohl mit der Laserbearbeitungsdüse als auch mit einem anstelle der Laserbearbeitungsdüse an dem Laserbearbeitungskopf angeordneten Messkopf jeweils unter Vorgabe eines Sollabstands an einem Werkstück abgefahren wurden, Abstandskorrekturwerte für den Sollabstand der Laserbearbeitungsdüse entlang der Soll-Bewegungsbahn ermittelt.

Die Erfindung betrifft schließlich auch noch ein Computerprogrammprodukt, welches Codemittel aufweist, die zum Durchführen aller Schritte des oben beschriebenen Verfahrens angepasst sind, wenn das Programm auf einer Maschinensteuerung einer Laserbearbeitungsmaschine abläuft

Weitere Vorteile der Erfindung ergeben sich aus den Ansprüchen, der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine zum Durchführen des erfindungsgemäßen Verfahrens zum Ermitteln von Abstandskorrekturwerten geeignete Laserbearbeitungsmaschine;
- Fign. 2a, 2b: die Feldlinien der kapazitiven Abstandsmessung einer Laserbearbeitungsdüse zu einem ebenen Werkstück (Fig. 2a) und zu einem Inneneck eines 3-dimensionalen Werkstücks (Fig. 2b);
- Fign. 3a, 3b: die Feldlinien der kapazitiven Abstandsmessung eines Messkopfes zu einem ebenen Werkstück (Fig. 3a) und zu einem Inneneck eines 3-dimensionalen Werkstücks (Fig. 3b); und
- Fig. 4: die unter Vorgabe des gleichen Sollabstands zu einem Inneneck eines 3-dimensionalen Werkstücks abgefahrenen Bewegungsbahnen der Laserbearbeitungsdüse und des Messkopfes, sowie die daraus ermittelten Korrekturwerte für den Sollabstand der Laserbearbeitungsdüse beim Laserbearbeiten des Werkstücks.

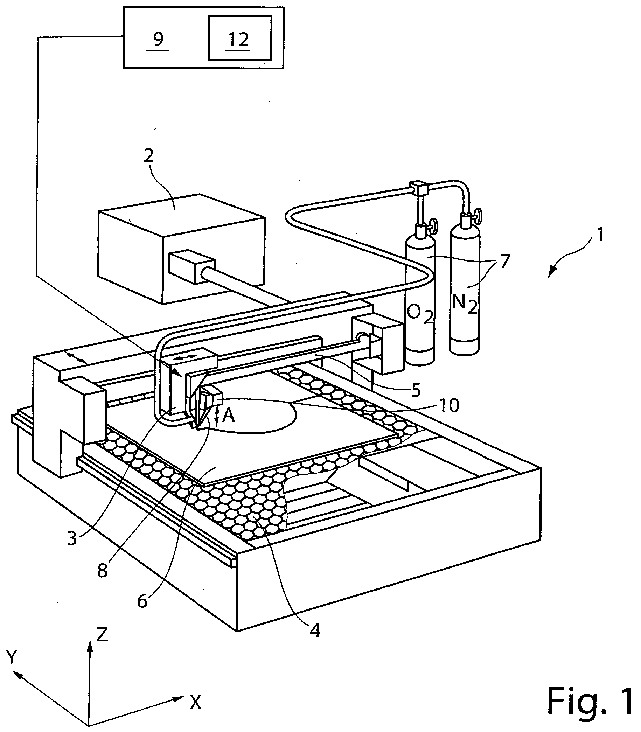

Die in Fig. 1 perspektivisch als Flachbett-Laserschneidmaschine dargestellte Laserbearbeitungsmaschine 1 umfasst einen z.B. als CO₂-Laser, Diodenlaser oder Festkörperlaser ausgeführten Laserstrahlerzeuger 2, einen in X-, Y- und Z-Richtung verfahrbaren Laserbearbeitungskopf 3 und eine Werkstückauflage 4. Im Laserstrahlerzeuger 2 wird ein Laserstrahl 5 erzeugt, der mittels eines (nicht gezeigten) Lichtleitkabels oder (nicht gezeigter) Umlenkspiegel vom Laserstrahlerzeuger 2 zum Laserbearbeitungskopf 3 geführt wird. Der Laserstrahl 5 wird mittels einer im Laserbearbeitungskopf 3 angeordneten Fokussieroptik auf ein Werkstück (z.B. ein Blech) 6 gerichtet, das auf der Werkstückauflage 4 aufliegt. Die Laserbearbeitungsmaschine 1 wird darüber hinaus mit Prozessgasen 7, beispielsweise Sauerstoff und Stickstoff, versorgt. Das Prozessgas 7 wird einer als Schneidgasdüse ausgeführten Laserbearbeitungsdüse 8 des Laserbearbeitungskopfes 3 zugeführt, aus der es zusammen mit dem Laserstrahl 5 austritt, um das Werkstück 6 zu schneiden. Die Laserbearbeitungsmaschine 1 umfasst weiterhin eine Maschinensteuerung 9 zum Bewegen des Laserbearbeitungskopfes 3 samt Laserbearbeitungsdüse 8 entlang einer Soll-Bewegungsbahn.

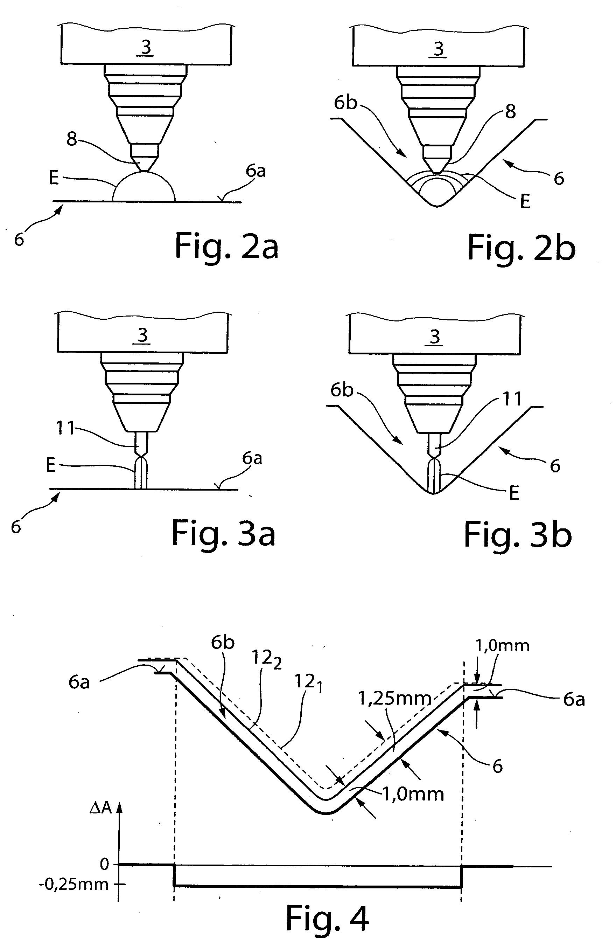

Beim Laserbearbeiten wird der Abstand ("Düsenabstand") A der Laserbearbeitungsdüse 8 zum Werkstück 6 fortlaufend gemessen und auf einen Sollabstand geregelt, indem der Laserbearbeitungskopf 3 auf das Werkstück 6 zu- oder von diesem wegbewegt wird. In den Laserbearbeitungskopf 3 ist eine Abstandsmesseinrichtung 10 zur kapazitiven Messung des Abstands A zwischen der metallenen Laserbearbeitungsdüse 8 und dem metallenen Werkstück 6 integriert. Bei der Abstandsmessung erzeugt eine Spannungsquelle der Abstandsmesseinrichtung 10 eine vorgegebene Potentialdifferenz zwischen der Laserbearbeitungsdüse 8 und dem Werkstück 6, so dass sich zwischen beiden ein elektrisches Feld E ausbildet, dessen Feldlinien in Fign. 2a, 2b gezeigt sind. Fig. 2a zeigt die Feldlinien bei der kapazitiven Abstandsmessung zu einer parallel zur XY-Ebene verlaufenden ebenen Werkstückoberfläche 6a und Fig. 2b die Feldlinien zu einem Inneneck 6b eines 3-dimensionalen Werkstücks 6.

In Abhängigkeit vom Düsenabstand A verändert sich die Lage bzw. die Länge der Feldlinien und somit die Kapazität. Um den Zusammenhang zwischen dem Abstand A und der Kapazität zu ermitteln, kann z.B. eine Kapazitätsmessung bei variablem, bekanntem Abstand A vorgenommen werden, um eine Kennlinie für den Düsenabstand A in Abhängigkeit von der Kapazität zu erhalten. Der Düsenabstand A wird dann entweder in der Abstandsmesseinrichtung 10 selbst oder in einer anderen in der Laserbearbeitungsmaschine 1 vorgesehenen Baueinheit anhand der Kennlinie und der gemessenen Kapazität bestimmt. Um einen eindeutigen Zusammenhang zwischen Kapazität und Düsenabstand A bei der Kalibrierung der Abstandsmesseinrichtung 10 zu erhalten, wird zur Bestimmung der Kennlinie typischerweise ein wie in Fig. 2a gezeigtes ebenes Werkstück 6 verwendet. Ist die Geometrie des Werkstücks 6 jedoch, wie in Fig. 2b gezeigt, nicht über die gesamte Bearbeitungsdauer konstant, verändert sich das mit der Laserbearbeitungsdüse 8 gemessene Abstandssignal aufgrund der lateralen Ausdehnung des elektrischen Feldes E, also aufgrund der lateralen Empfindlichkeit der Kapazitätsmessung, nicht nur mit dem Düsenabstand A, sondern auch mit der Werkstückgeometrie. Bei 3-dimensionalen Werkstücken kann daher der Sollabstand zwischen Laserbearbeitungsdüse 8 und Werkstück 6 nicht in einem engen Toleranzbereich konstant gehalten werden. Dieses systematische Problem kann mittels Korrekturwerten des Sollabstandes behoben werden, welche an die entsprechenden Stellen des NC-Programms des Werkstücks 6 eingetragen bzw. angepasst werden.

Zum Ermitteln der Abstandskorrekturwerte ΔA wird das Werkstück 6, wie in Fig. 4 gezeigt, sowohl mit der Laserbearbeitungsdüse 8 selbst als auch mit einem anstelle der Laserbearbeitungsdüse 8 am Laserbearbeitungskopf 3 angeordneten Messkopf 11 (Fign. 3a, 3b), welcher eine geringere laterale Empfindlichkeit der Kapazitätsmessung als die Laserbearbeitungsdüse 8 aufweist, jeweils unter Vorgabe des gleichen Sollabstands von z.B. 1,0 mm abgefahren und dabei die jeweils abgefahrene Bewegungsbahn und somit der Ist-Abstand der Laserbearbeitungsdüse 8 und des Messkopfes 11 bestimmt. Der Ist-Abstand der Laserbearbeitungsdüse 8 entlang der abgefahrenen Bewegungsbahn ist als gestrichelte Kurve 12₁ und der Ist-Abstand des Messkopfes 11 entlang der abgefahrenen Bewegungsbahn als durchgezogene Kurve 12₂ dargestellt.

Wie in Fign 3a, 3b schematisch gezeigt, weist der nicht schneidfähige Messkopf 11 eine geringere laterale Ausdehnung des elektrischen Feldes E auf und ist daher unabhängig von der Werkstückgeometrie. Der Messkopf 11 kann als Messspitze ausgebildet sein, deren Durchmesser am werkstückzugewandten Messende kleiner als der Düsendurchmesser am werkstückzugewandten Düsenende der Laserbearbeitungsdüse 8 ist.

Der ermittelte Ist-Abstand des Messkopfes 11 beträgt entlang der gesamten abgefahrenen Bewegungsbahn 1,0 mm, entspricht also dem Sollabstand. Der ermittelte Ist-Abstand der Laserbearbeitungsdüse 8 beträgt an den ebenen Werkstückoberflächen 6a ebenfalls 1,0 mm und an dem Inneneck 6b dagegen 1,25 mm, entspricht also nur an den ebenen Werkstückbereichen 6a dem Sollabstand. Eine z.B. in die Maschinensteuerung 9 integrierte Einrichtung 12 ermittelt aus den mit der Laserbearbeitungsdüse 8 und mit dem Messkopf 11 bestimmten Bewegungsbahnen die Abstandskorrekturwerte ΔA für den Sollabstand der Laserbearbeitungsdüse 8 entlang der Soll-Bewegungsbahn beim Laserbearbeiten des Werkstücks 6. Im vorliegenden Beispiel wird für das Inneneck 6b ein Abstandskorrekturwert ΔA von -0,25mm ermittelt, um den der im NC-Programm enthaltene Sollabstand korrigiert wird. Beim Laserbearbeiten dieses oder eines identischen Werkstücks 6 ergibt sich dann ein Düsenabstand A von 1 mm, der entlang der gesamten abgefahrenen Soll-Bewegungsbahn in einem engen Toleranzfenster konstant gehalten wird.

Anstelle aus der Differenz von Ist-Abständen können die Abstandskorrekturwerte ΔA auch aus der Differenz der Stellwerte der Abstandsregelung beim Abfahren mit der Laserbearbeitungsdüse 8 und mit dem Messkopf 11 ermittelt werden.

## Patentansprüche

1. Verfahren zum Ermitteln von Abstandskorrekturwerten (ΔA) eines Sollabstandes zwischen einer an einem Laserbearbeitungskopf (3) angeordneten Laserbearbeitungsdüse (8) und einem Werkstück (6) beim Laserbearbeiten des Werkstücks (6), wobei beim Laserbearbeiten der Abstand (A) der entlang einer Soll-Bewegungsbahn bewegten Laserbearbeitungsdüse (8) zum Werkstück (6) kapazitiv gemessen und auf den korrigierten Sollabstand geregelt wird,
**dadurch gekennzeichnet,**
**dass** das Werkstück (6) sowohl mit der Laserbearbeitungsdüse (8) als auch mit einem anstelle der Laserbearbeitungsdüse (8) an dem Laserbearbeitungskopf (3) angeordneten Messkopf (11), welcher eine geringere laterale Empfindlichkeit der Kapazitätsmessung als die Laserbearbeitungsdüse (8) aufweist, jeweils unter Vorgabe eines Sollabstands abgefahren und dabei die abgefahrene Bewegungsbahn der Laserbearbeitungsdüse (8) bestimmt wird, und dass aus den mit der Laserbearbeitungsdüse (8) und mit dem Messkopf (11) bestimmten Bewegungsbahnen die Abstandskorrekturwerte (ΔA) für den Sollabstand der Laserbearbeitungsdüse (8) entlang der Soll-Bewegungsbahn beim Laserbearbeiten des Werkstücks (6) ermittelt werden.

2. Verfahren nach Anspruch 1, **dadurch gekennzeichnet, dass** der Messkopf (11) als Messspitze ausgebildet ist, deren Durchmesser an dem werkstückzugewandten Messende kleiner als der Düsendurchmesser an dem werkstückzugewandten Düsenende der Laserbearbeitungsdüse (8) ist.

3. Verfahren nach Anspruch 1 oder 2, **dadurch gekennzeichnet, dass** für einen zu bearbeitenden Werkstücktyp die zugehörigen Abstandskorrekturwerte (ΔA) für den Sollabstand der Laserbearbeitungsdüse (8) entlang der Soll-Bewegungsbahn als korrigierte Sollabstände in ein NC-Programm zum Laserbearbeiten des Werkstücks (6) übernommen werden.

4. Verfahren nach einem der vorhergehenden Ansprüche, **dadurch gekennzeichnet, dass** das Laserbearbeiten eines Werkstücks (6) entlang der Soll-Bewegungsbahn mit den zuvor an dem Werkstück (6) oder an einem gleichen Werkstück ermittelten Abstandskorrekturwerten (ΔA) erfolgt.

5. Maschine (1) zum Laserbearbeiten eines Werkstücks (6), mit einer an einem Laserbearbeitungskopf (3) angeordneten Laserbearbeitungsdüse (8), mit einer Abstandsmesseinrichtung (10) zur kapazitiven Messung des Abstands (A) zwischen der Laserbearbeitungsdüse (8) und dem Werkstück (6) und mit einer Maschinensteuerung (9) zum Bewegen der Laserbearbeitungsdüse (8) entlang einer Soll-Bewegungsbahn unter Vorgabe eines Sollabstands der Laserbearbeitungsdüse (8) zum Werkstück (6),
**dadurch gekennzeichnet,**
**dass** die Laserbearbeitungsmaschine (1) eine Einrichtung (12) aufweist, die anhand von Bewegungsbahnen, welche entlang einer Soll-Bewegungsbahn sowohl mit der Laserbearbeitungsdüse (8) als auch mit einem anstelle der Laserbearbeitungsdüse (8) an dem Laserbearbeitungskopf (3) angeordneten Messkopf (11) jeweils unter Vorgabe eines Sollabstands an einem Werkstück (6) abgefahren wurden, Abstandskorrekturwerte (ΔA) für den Sollabstand der Laserbearbeitungsdüse (8) entlang der Soll-Bewegungsbahn ermittelt.

6. Laserbearbeitungsmaschine nach Anspruch 5, **dadurch gekennzeichnet, dass** die Einrichtung (12) in die Maschinensteuerung (9) integriert ist.

7. Laserbearbeitungsmaschine nach Anspruch 5 oder 6, **dadurch gekennzeichnet, dass** die Einrichtung (12) die ermittelten Abstandskorrekturwerte (ΔA) als korrigierte Sollabstände in ein NC-Programm zum Laserbearbeiten des Werkstücks (6) einträgt.

8. Computerprogrammprodukt, welches Codemittel aufweist, die zum Durchführen aller Schritte des Verfahrens nach einem der Ansprüche 1 bis 4 angepasst sind, wenn das Programm auf einer Maschinensteuerung (9) einer Laserbearbeitungsmaschine (1) abläuft.

## Claims

1. A method for determining distance correction values (ΔA) of a desired distance between a laser processing nozzle (8), which is arranged on a laser processing head (3), and a workpiece (6) during the laser processing of the workpiece (6), wherein during laser processing, the distance (A) of the laser processing nozzle (8), which is moved along a desired movement path, from the workpiece (6) is measured capacitively and is controlled to the corrected desired distance,
**characterized in that**
the workpiece (6) is scanned both by means of the laser processing nozzle (8) and a measurement head (11), which is arranged in place of the laser processing nozzle (8) on the laser processing head (3) and which has a lower lateral sensitivity of the capacitance measurement than the laser processing nozzle (8), in each case with specification of a desired distance, and the scanned movement path of the laser processing nozzle (8) is determined, and the distance correction values (ΔA) for the desired distance of the laser processing nozzle (8) along the desired movement path during the laser processing of the workpiece (6) are determined from the movement paths which are determined with the laser processing nozzle (8) and with the measurement head (11).

2. The method as claimed in claim 1, **characterized in that** the measurement head (11) is configured in the form of a measurement tip, the diameter of which at the workpiece-facing measurement end is smaller than the nozzle diameter at the workpiece-facing nozzle end of the laser processing nozzle (8).

3. The method as claimed in claim 1 or 2, **characterized in that** for a workpiece type to be processed, the associated distance correction values (ΔA) for the desired distance of the laser processing nozzle (8) along the desired movement path are taken as the corrected desired distances in an NC program for laser processing of the workpiece (6).

4. The method as claimed in one of the preceding claims, **characterized in that** the laser processing of a workpiece (6) along the desired movement path is effected with the distance correction values (ΔA) which were previously determined on the workpiece (6) or on an identical workpiece.

5. A machine (1) for laser processing a workpiece (6), comprising a laser processing nozzle (8) arranged on a laser processing head (3), a distance measurement device (10) for capacitively measuring the distance (A) between the laser processing nozzle (8) and the workpiece (6), and a machine controller (9) for moving the laser processing nozzle (8) along a desired movement path with specification of a desired distance of the laser processing nozzle (8) from the workpiece (6),
**characterized in that**
the laser processing machine (1) comprises a device (12) which determines distance correction values (ΔA) for the desired distance of the laser processing nozzle (8) along the desired movement path on the basis of movement paths which were scanned, along a desired movement path, both by the laser processing nozzle (8) and a measurement head (11), which is arranged on the laser processing head (3) in place of the laser processing nozzle (8), in each case with the specification of a desired distance on a workpiece (6).

6. The laser processing machine as claimed in claim 5, **characterized in that** the device (12) is integrated in the machine controller (9).

7. The laser processing machine as claimed in claim 5 or 6, **characterized in that** the device (12) enters the determined distance correction values (ΔA), as corrected desired distances, into an NC program for laser processing the workpiece (6).

8. A computer program product, comprising code means that are adapted for performing all the steps of the method as claimed in one of claims 1 to 4 if the program is executed on a machine controller (9) of a laser processing machine (1).

## Revendications

1. Procédé de détermination de valeurs de correction de distance (ΔA) d'une distance de consigne entre une buse d'usinage au laser (8) disposée sur une tête d'usinage au laser (3) et une pièce (6) lors de l'usinage au laser de la pièce (6), la distance (A) de la buse d'usinage au laser (8) déplacée le long d'un trajet de déplacement de consigne par rapport à la pièce (6) étant mesurée capacitivement et réglée à la distance de consigne corrigée lors de l'usinage au laser,
**caractérisé en ce**
**que** la pièce (6) est parcourue aussi bien avec la buse d'usinage au laser (8) qu'avec une tête de mesure (11) disposée sur la tête d'usinage au laser (3) à la place de la buse d'usinage au laser (8), laquelle tête de mesure (11) présente une sensibilité latérale de la mesure de capacité inférieure à celle de la buse d'usinage au laser (8), en spécifiant à chaque fois une distance de consigne et en déterminant le trajet de déplacement parcouru par la buse d'usinage au laser (8), et **en ce que** les valeurs de correction de distance (ΔA) pour la distance de consigne de la buse d'usinage au laser (8) le long du trajet de déplacement de consigne lors de l'usinage au laser de la pièce (6) sont déterminées à partir des trajets de déplacement déterminés avec la buse d'usinage au laser (8) et avec la tête de mesure (11).

2. Procédé selon la revendication 1, **caractérisé en ce que** la tête de mesure (11) est réalisée sous la forme d'une pointe de mesure dont le diamètre à l'extrémité de mesure tournée vers la pièce est inférieur au diamètre de buse à l'extrémité de la buse d'usinage au laser (8) tournée vers la pièce.

3. Procédé selon la revendication 1 ou 2, **caractérisé en ce que**, pour un type de pièce à usiner, les valeurs de correction de distance (ΔA) associées pour la distance de consigne de la buse d'usinage au laser (8) le long du trajet de déplacement de consigne sont adoptées en tant que distances de consigne corrigées dans un programme CN d'usinage au laser de la pièce (6).

4. Procédé selon l'une des revendications précédentes, **caractérisé en ce que** l'usinage au laser d'une pièce (6) s'effectue le long du trajet de déplacement de consigne avec les valeurs de correction de distance (ΔA) préalablement déterminées sur la pièce (6) ou sur une pièce identique.

5. Machine (1) pour l'usinage au laser d'une pièce (6), comportant une buse d'usinage au laser (8) disposée sur une tête d'usinage au laser (3), un dispositif de mesure de distance (10) pour la mesure capacitive de la distance (A) entre la buse d'usinage au laser (8) et la pièce (6) et une commande de machine (9) pour déplacer la buse d'usinage au laser (8) le long d'un trajet de déplacement de consigne en spécifiant une distance de consigne de la buse d'usinage au laser (8) par rapport à la pièce (6), **caractérisée en ce**
**que** la machine d'usinage au laser (1) présente un dispositif (12) qui, à partir de trajets de déplacement qui ont été parcourus sur une pièce à usiner (6) le long d'un trajet de déplacement de consigne aussi bien avec la buse d'usinage au laser (8) qu'avec une tête de mesure (11) disposée sur la tête d'usinage au laser (3) à la place de la buse d'usinage au laser (8), en spécifiant à chaque fois une distance de consigne, détermine des valeurs de correction de distance (ΔA) pour la distance de consigne de la buse d'usinage au laser (8) le long du trajet de déplacement de consigne.

6. Machine d'usinage au laser selon la revendication 5, **caractérisée en ce que** le dispositif (12) est intégré dans la commande de machine (9).

7. Machine d'usinage au laser selon la revendication 5 ou 6, **caractérisée en ce que** le dispositif (12) enregistre les valeurs de correction de distance (ΔA) déterminées en tant que distances de consigne corrigées dans un programme CN d'usinage au laser de la pièce (6).

8. Produit programme informatique qui présente des moyens de code adaptés à mettre en oeuvre toutes les étapes du procédé selon l'une des revendications 1 à 4 lorsque le programme est exécuté sur une commande de machine (9) d'une machine d'usinage au laser (1).
